# EUROPEAN PATENT APPLICATION

(11) **EP 2 413 271 A1**
(43) Date of publication of application: **01.02.2012**
(21) Application number: 10305831.9
(22) Date of filing: 28.07.2010
(51) Int. Cl.: G06Q 10/00, G06Q 50/00

(54) **Method and apparatus using current fares for seating availability determination**

(71) Applicant: Amadeus S.A.S., 06410 Biot (FR)
(72) Inventor: Singer, Joël, 06600, ANTIBES (FR); Rubsamen, Roman, 83550, VIDAUBAN (FR)
(74) Representative: Decobert, Jean-Pascal

(57) **Abstract**

A travel reservation system has an interface with system users configured to receive of availability requests from system users. The travel reservation system further includes a reservation system coupled with the interface and an inventory system coupled with the reservation system. The inventory system is configured to respond to a receipt of an availability request to obtain bid prices associated with the availability request and to obtain current fares associated with the availability request from the reservation system. The inventory system is further configured to compare the current fares to the bid prices so as to one of grant or not grant availability based on the result of the comparison. Also disclosed are related methods and computer programs.

## Description

### TECHNICAL FIELD:

The exemplary embodiments of this invention relate generally to computerized reservation systems and methods, such as those used for making airline reservations and, more specifically, relate to techniques for determining an availability of inventory.

### BACKGROUND:

The following abbreviations that may appear in the text and/or the drawings of this patent application are defined as follows:
- IATA: international air transport association
- EDIFACT: electronic data interchange for administration, commerce and transport
- EMSR: expected marginal seat revenue
- PAOREQ: product availability offering request
- PAORES: product availability offering response

The following terms can be defined as follows.

### Revenue Management System

In the passenger airlines business the revenue management system is a computerized system that is responsible for determining an optimum seat availability allocation strategy in order to maximize expected revenue from passenger bookings.

### Yield Management System

In the passenger airlines business yield management is a computerized system that is responsible for processing past airline fares to output average monetary values, referred to as "yields" that are used in seat availability calculation algorithms.

Currently substantially all passenger airlines use a revenue management system to automatically provide their inventory system with an optimal number of seats to be made available on their respective reservation networks. One technique to achieve this objective is for the revenue management system to send monetary data to the inventory system. For example an algorithm, such as an EMSR algorithm, can be used in the revenue management system to provide the inventory system with marginal revenue values referred to as "bid prices". These bid prices are the lowest prices at which the passenger airline is willing to sell additional seats on its network. Algorithms used in the yield management system provide the inventory system with the average revenue values referred to as "yields". Typically the yields are linked to past airline fares, or to past coupons credited to the airline, and are thus based on historical data. Upon reception of an availability request by the inventory system the yields associated with the availability request are compared to the bid prices, and seat availability is deduced from this comparison (e.g., a condition where yields < bid prices implies no availability).

US Patent No.: 6,085,164, "Apparatus and Method of Allocating Flight Inventory Resources Based on the Current Market Value", Smith et al. (Sabre Inc.) describes one conventional type of system that uses historical information on past market transactions of flight inventory resources.

### SUMMARY

The foregoing and other problems are overcome, and other advantages are realized, in accordance with the exemplary embodiments of this invention.

In a first aspect thereof the exemplary embodiments provide a method to determine travel-related inventory availability. The method comprises steps of, in response to a reception of an availability request by an inventory system, obtaining bid prices associated with the availability request; obtaining current fares associated with the availability request; and comparing the current fares to the bid prices and one of granting or not granting availability based on the result of the comparison.

In a further aspect thereof the exemplary embodiments provide a non-transitory computer-readable memory medium that stores computer software executable by at least one data processor to perform operations that comprise, in response to a reception of an availability request by an inventory system, obtaining bid prices associated with the availability request; obtaining current fares associated with the availability request; and comparing the current fares to the bid prices and one of granting or not granting availability based on the result of the comparison.

In another aspect thereof the exemplary embodiments provide a travel reservation system that comprises an interface with system users configured to receive of availability requests from system users; a reservation system coupled with the interface and an inventory system coupled with the reservation system. The inventory system is configured to respond to a receipt of an availability request to obtain bid prices associated with the availability request and to obtain current fares associated with the availability request from the reservation system. The inventory system is further configured to compare the current fares to the bid prices so as to one of grant or not grant availability based on the result of the comparison.

In another aspect of the invention, a computerized computer system is disclosed to :
- an interface with system users configured to receive availability requests from system users;
- a reservation system coupled with the interface and comprising means for computing current fares associated with availability requests and based on a set of fare determination parameters; and
- a revenue management system comprising means for computing bid prices associated with availability requests; and
- an inventory system coupled with the reservation system,
characterized in that said inventory system is configured to build a response to a receipt of an availability request, to obtain bid prices associated with the availability request from the revenue management system and to obtain current fares associated with the availability request from the reservation system, said inventory system further comprising means for comparing the current fares to the bid prices and means for triggering a response of unavailability based on the result of the comparison if the current fares are less than the bid prices.

Current techniques require a very heavy data processing (complex algorithm, update of historical data, probabilistic definitions of the future demand for bookings ...). The invention determines an availability of inventory in a very different manner, thereby minimizing the processing means.

In a preferred embodiment, current fares determination is based on data contained in the availability request and on replacement data, each time the data of the availability request is lacking some information helpful or required for the fare determination process. Indeed, at the stage of availability determination, all the data required for the fare determination are usually not requested from the user. The invention overcomes this problem of lack of data with the use of pre-defined replacement data. The association of replacement data with fare determination data contained in the availability request forms the set of fare determination parameters to be used by the reservation system. In the perspective, the computerized installation preferably includes, within the inventory system :
- means for extracting fare determination data from the availability request;
- means for associating the extracted fare determination data with pre-stored replacement data, the association of the extracted fare determination data and of the replacement data forming the set of determination parameters;
- means for communicating the set of determination parameters to the reservation system for computing the current fares.

Variations and possible features are listed hereafter :
- during the step of comparing if the current fares are less than the bid prices then availability is not granted
- the bid prices represent marginal revenue values and are lowest prices at which a passenger airline is willing to sell additional seats.
- the bid prices are obtained from a revenue management system, and where the current fares are obtained from a reservation system.
- the availability request is received from an inquirer via the reservation system.
- the steps are executed in an on-line passenger airline reservation system that stores data for a plurality of different passenger airlines.
- the method is performed as a result of execution of computer software by at least one data processor, the computer software being stored in a non-transitory computer-readable memory medium.

### BRIEF DESCRIPTION OF THE DRAWINGS

The foregoing and other aspects of the embodiments of this invention are made more evident in the following Detailed Description of the Preferred Embodiments, when read in conjunction with the attached Drawing Figures, wherein:
Figure 1 is a simplified system-level block diagram showing various components that are suitable for implementing the exemplary embodiments of this invention.
Figure 2 shows the reservation system and inventor system components of Figure 1, and message / data flows between these components in accordance with the exemplary embodiments.
Figure 3 is a logic flow diagram that illustrates a method, and the operation of computer program instructions, in accordance with the exemplary embodiments.

### DETAILED DESCRIPTION

The inventors have realized that at least one drawback associated with the above-described conventional availability calculation technique is that, theoretically (from a revenue management perspective), the bid prices should be compared to the actual airline fare associated to the availability request, and not to the yields. This is true at least for the reason that the yields are average revenue values based on past (historical) data, and do not reflect current applicable airline fares. As a consequence, the conventional practice of comparing bid prices and yields can result in the passenger airline refusing a booking, whereas comparing bid prices and current fares can result in the passenger airline accepting the booking, thereby improving the revenue of the passenger airline.

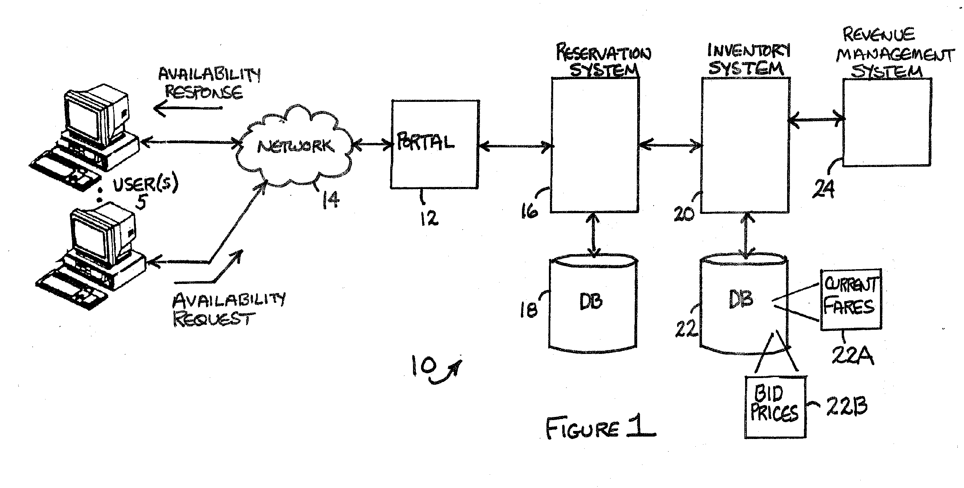

Figure 1 is a simplified system-level block diagram showing various components that are suitable for implementing the exemplary embodiments of this invention. In Figure 1 a system 10 includes a portal to a network 14 (e.g., the Internet) whereby users 5 can make booking / reservation inquiries. The portal acts as an interface. For a case of an on-line reservation system the portal 12 can include a web server. Connected / coupled with the portal 12 is a reservation system 16 having an associated reservation memory / database (DB) 18. The system 10 also includes an inventory system 20 having an associated memory / inventory DB 22. The system 10 can also include a revenue management system 24. The reservation system 16, the inventory system 20 and the revenue management system 24 can each be implemented using one or more suitable computer hardware / software platforms, and can embodied as servers containing one or more data processors and associated memory storing computer software and data.

The reservation system 16, the inventory system 20 and the revenue management system 24 can be co-located at the same site, or they may be located at geographically separated sites and interconnected via a suitable communication network or networks. The system 10 may be associated with a particular passenger airline, or it can be associated in whole or in part with an organization that handles booking reservations for the passenger airline and typically other airlines as well. The inventory system DB 22 is assumed to store information descriptive of current (up-to-date) fares 22A of the airline, which can be retrieved from the reservation system 16 and cached or temporarily stored in the DB 22. The DB 22 can also store (at least temporarily) (current) bid prices 22B received from the revenue management system 24.

The reservation system 16 is assumed to have access to information by which the current fares charged for travel segments and groups of travel segments can be determined, changed as needed and quoted to the users 5. This information can include items such as current demand for a particular travel segment or segments, expected demand for the particular travel segment or segments, and extrinsic factors such as fuel prices and the like, as several non-limiting examples.

The exemplary embodiments of this invention relate at least in part to providing a technique, procedure, method, computer software and system for a passenger airline to have seamless seat availability computed using the computerized inventory system 20, where a current fare amount used in a seat availability algorithm is obtained by the computerized inventory system 20. The exemplary embodiments link the seat availability offered by the passenger airline to potential customers (users 5) over the communication network 14 to the current level of the airline's fares 22A as reflected in the inventory system 20.

The use of the exemplary embodiments of this invention can beneficially result in increased revenue for a passenger airline. For example, the use of the exemplary embodiments can prevent the passenger airline from offering seat availability in a case of rising seat prices, such as rising seat prices due to unexpected demand and/or some other factor(s), such as due to a significant increase in fuel prices, as the level of current fares are taken into account to compute the seat availability. The use of the exemplary embodiments can enable the passenger airline to offer seat availability without requiring the use of historical fare data and, hence, without needing to consult a yield management system. The exemplary embodiments use the current airline fares 22A as a means to compute offered seat availability related to the inventory system 20.

The exemplary embodiments link the seat availability offered by the passenger airline on its network to the level of the current fares 22A, the linking being done on the inventory system 20 side as a result of the comparison of the current fares 22A, accessed in real-time or substantially real-time, with the bid prices 22B of the airline.

Described now in further detail are the exemplary embodiments of this invention.

As was noted, the inventory system 20 stores, or otherwise has access to, the bid prices 22B. Upon reception of an availability request by the inventory system 20 the system 10 operates as follows:
the bid prices 22B are retrieved;
the current fares 22A associated with the availability request are retrieved, such as by performing a pricing request to the reservation system 16 in response to the incoming availability request; and
the current fares 22A are compared to the bid prices 22B and availability is granted /not granted based on the result of the comparison (e.g., current fares < bid prices implies no availability).

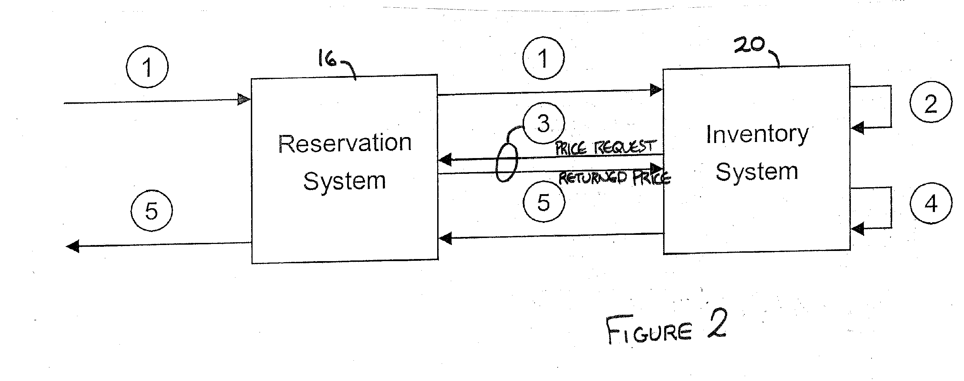

Referring now also to Figure 2, at (1) an availability request for a given itinerary reaches the airline reservation system 16, and is cascaded, i.e., forwarded (with additional information if required) to the airline inventory system 20. For example, from an IATA perspective the availability request is a PAOREQ Edifact message. At (2) the bid prices 22B associated with the requested itinerary, previously provided by the revenue management system 24 to the inventory system 20 are prepared for use. At (3) the inventory system 20 requests the reservation system 16 to price the requested itinerary, through an interactive remote pricing service call. Depending on the information received at step (1), some data mandatory for the pricing service may be missing (e.g., the passenger type). In this case appropriate replacement data can be used in order to price the itinerary. At (4) the inventory system compares the pricing of the requested itinerary (i.e., the current fares) returned by the reservation system 16 at step (3) to the bid prices 22B associated with the requested itinerary prepared at step (2), and the seating availability is computed as the result of this comparison. At step (5) the inventory system 20 replies to the availability request for the requested itinerary, and the reply is cascaded to the reservation system 16 and on to the requestor (e.g., to one of the users 5). From an IATA perspective this reply can be a PAORES Edifact message.

What follows is one non-limiting example of the use of the exemplary embodiments of this invention.

Assume that an adult customer wants to check the availability for the journey:
LHR-SIN, 01-Jan-09, 6X 1
SIN-LHR, 10-Jan09, 6X 2.

The following process then takes place.
(A) the resulting availability request is cascaded to the inventory system 20;
(B) bid prices on LHR-SIN 01-Jan-09, 6X 1 and on SIN-LHR, 10-Jan09, 6X 2 are retrieved by the inventory system 20 from the revenue management system 24;
(C) the inventory system 20 issues a pricing request to the reservation system 16 for the journey, and retrieves the corresponding (current) fares; and
(D) the inventory system 20 computes the availability for the journey based on the current fares 22A and the bid prices 22B data, and cascades the reply to the reservation system 16.

Note that using the current airline fares in the availability calculation at the inventory system 20 server is not straightforward as it implies access to this data, which is typically stored in a different system (e.g., in the reservation system 16) than where the inventory data is stored. In an embodiment where the system 10 hosts the fares and the inventory system of a number of airlines then access to all required data is ensured. In a further embodiment the historical interfaces can be enhanced so as to provide the capability for the reservation system 16 to interact with the inventory system 20 so as to forward a received availability inquiry to the inventory system (where the inquiry can include, for example, at least some of origin/destination/flight number/departure date/additional information), and to receive from the inventory system 20 the indication of availability. The enhancement to the historical interfaces can also include the ability to send the current fare information to the inventory system 20.

Further, at the availability calculation time not all data may be available to compute applicable fares (e.g., the passenger type), implying that proper solutions need be implemented to overcome any such lack of data. These solutions can include making reasoned assumptions as to any missing data. What follows are several non-limiting examples of information that can be used for a pricing request:
Round Trip indicator + return trip information
"Round trip" by default if not transmitted

Passenger count
"1" by default if not transmitted

Passenger type (e.g., "Infant", "Adult", "Military", "Member of Government")
"Adult" by default if not transmitted

Discount type (e.g., "15%" or "EASTER")
"None" by default if not transmitted

Fare type to use (e.g., "Private Fare" or "Negotiated Fare")
"Standard" by default if not transmitted.

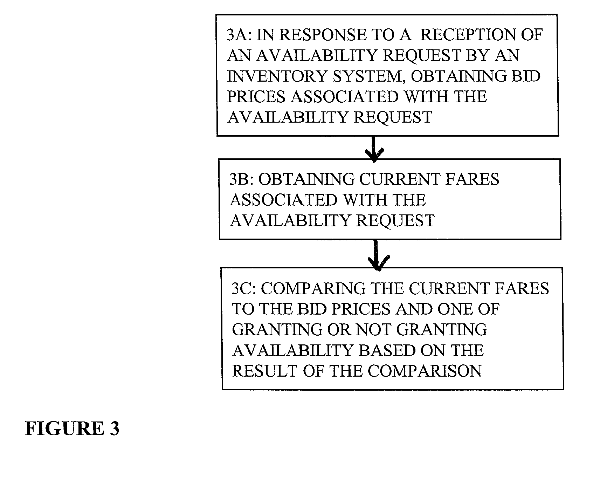

Figure 3 is a logic flow diagram that illustrates a method, and the operation of computer program instructions, in accordance with the exemplary embodiments. The method determines travel-related inventory availability and comprises steps of (Block 3A) in response to a reception of an availability request by an inventory system, obtaining bid prices associated with the availability request; (Block 3B) obtaining current fares associated with the availability request; and (Block 3C) comparing the current fares to the bid prices and one of granting or not granting availability based on the result of the comparison.

In the method of the preceding paragraph, where during the step of comparing if the current fares are less than the bid prices then availability is not granted.

In the method of the preceding paragraphs, where the bid prices represent marginal revenue values and are lowest prices at which a passenger airline is willing to sell additional seats.

In the method of the preceding paragraphs, where the bid prices are obtained from a revenue management system, and where the current fares are obtained from a reservation system.

In the method of the preceding paragraph, where the availability request is received from an inquirer via the reservation system.

In the method of the preceding paragraphs, where the steps are executed in an on-line passenger airline reservation system that stores data for a plurality of different passenger airlines.

In the method of the preceding paragraphs, performed as a result of execution of computer software by at least one data processor, the computer software being stored in a non-transitory computer-readable memory medium.

The exemplary embodiments are also directed to a system that comprises means, responsive to a reception of an availability request by an inventory system, for obtaining bid prices associated with the availability request; means for obtaining current fares associated with the availability request; and means for comparing the current fares to the bid prices and one of granting or not granting availability based on the result of the comparison.

The foregoing description has provided by way of exemplary and non-limiting examples a full and informative description of exemplary embodiments of this invention. However, various modifications and adaptations may become apparent to those skilled in the relevant arts in view of the foregoing description, when read in conjunction with the accompanying drawings and the appended claims. As but one example, in Figure 2 some of the users can make inquiries via an automated telephone system, or they may make an inquiry of a customer service representative. As another example, the use of the system 10 is not restricted to only making a determination as to the availability of seating on a passenger aircraft, but can be used as well for other types of travel modalities, as well as for other types of reservations such as for lodging. Thus, all such and similar modifications of the teachings of this invention will still fall within the scope of the embodiments of this invention.

Furthermore, some of the features of the preferred embodiments of this invention may be used to advantage without the corresponding use of other features. As such, the foregoing description should be considered as merely illustrative of the principles, teachings and embodiments of this invention, and not in limitation thereof.

## Claims

1. Computerized reservation system comprising:
- an interface with system users configured to receive availability requests from system users;
- a reservation system (16) coupled with the interface and comprising means for computing current fares associated with availability requests and based on a set of fare determination parameters; and
- a revenue management system (24) comprising means for computing bid prices associated with availability requests; and
- an inventory system (20) coupled with the reservation system,
**characterized in that** said inventory system (20) is configured to build a response to a receipt of an availability request, to obtain bid prices associated with the availability request from the revenue management system (24) and to obtain current fares associated with the availability request from the reservation system (16), said inventory system (20) further comprising means for comparing the current fares to the bid prices and means for triggering a response of unavailability based on the result of the comparison if the current fares are less than the bid prices.

2. The computerized reservation system of claim 1 wherein the inventory system (20) comprises:
- means for extracting fare determination data from the availability request;
- means for associating the extracted fare determination data with pre-stored replacement data, the association of the extracted fare determination data and of the replacement data forming the set of determination parameters;
- means for communicating the set of determination parameters to the reservation system (16) for computing the current fares.

3. The computerized system of claim 1 or 2, comprising a system user (5) from where the availability request is received via said reservation system (16).

4. The computerized system of any of claim 1 to 3, where the bid prices represent marginal revenue values and are lowest prices at which a passenger airline is willing to sell additional seats.

5. The computerized system of any of the preceding claims, embodied as an on-line passenger airline reservation system that stores data for a plurality of different passenger airlines.

6. The computerized system of any of the preceding claims, comprising computer software stored in a non-transitory computer-readable memory medium that is executed by at least one data processor that comprises part of the inventory system (20).
